# EUROPÄISCHE PATENTSCHRIFT

(11) **EP 0 797 847 B1**
(45) Veröffentlichungstag und Bekanntmachung des Hinweises auf die Patenterteilung: **21.04.1999**
(21) Anmeldenummer: 95940152.2
(22) Anmeldetag: 05.12.1995
(51) Int. Cl.: H01M 8/04, H01M 8/10, H01M 8/02

(54) **POLYMERELEKTROLYT-MEMBRAN-BRENNSTOFFZELLE**
POLYMER ELECTROLYTE MEMBRANE FUEL CELL
PILE A COMBUSTIBLE A MEMBRANE ELECTROLYTIQUE POLYMERE

(30) Priorität: 09.12.1994 DE 4443945
(43) Veröffentlichungstag der Anmeldung: 01.10.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: LEDJEFF, Konstantin, 79189 Bad Krozingen (DE); NOLTE, Roland, 79211 Denzlingen (DE)
(74) Vertreter: Pfenning, Meinig & Partner
(86) Internationale Anmeldenummer: DE9501752
(87) Internationale Veröffentlichungsnummer: WO9618216

(56) Entgegenhaltungen:
- EP-A- 0 328 115
- DE-A- 3 512 865
- US-A- 4 649 091
- US-A- 5 262 249

## Beschreibung

Die Erfindung betrifft eine PEM-Brennstoffzelle, die aus Streifenmembranen und Platten besteht, die aus nichtleitfähigem Material gefertigt sind, wobei der Stromabgriff über separate elektrisch leitfähige Strukturen erfolgt.

PEM-Brennstoffzellen (Polymer Electrolyte Membrane-Brennstoffzellen) sind elektrochemische Zellen, die vereinfachend aus Anode, Kathode und dazwischenliegendem polymeren Festelektrolyten bestehen. Zum Betrieb derartiger Zellen werden an beide Elektroden von außen laufend Brennstoffe herangeführt, die dort elektrochemisch umgesetzt werden, so daß an den Elektroden eine Spannung abgegriffen werden kann. Es ist nun aber unmöglich, die gesamte zugeführte chemische Energie umzuwandeln. Stets geht beim Betrieb der Brennstoffzelle ein gewisser Anteil als Wärme verloren. Insbesondere Brennstoffzellen mit höherer Leistung erfordern deshalb Maßnahmen zur Wärmeabfuhr. Dies erfolgt nach dem Stand der Technik durch elektrisch leitfähige Wärmeaustauscherplatten, die von einer Kühlflüssigkeit durchströmt werden (Literatur: A.J. Appley, E.B. Yeager, Energy 11, 137.152 [1986]).

Dabei stehen beide Seiten der Membran-Elektroden-Einheit mit den elektrisch leitfähigen Platten in Kontakt, wobei zum Erreichen der Zelldichtigkeit dazwischenliegende Dichtungsringe verwendet werden. Die leitfähigen Platten sind als Wärmeaustauscher konzipiert, d.h. sie enthalten Kanäle, durch die eine Kühlflüssigkeit strömt. Die Kühlflüssigkeit wird dabei über in der Platte vorhandene Öffnungen ein- und ausgespeist. Des weiteren sind in den elektrisch leitfähigen Platten Zu- und Abfuhrkanäle für die Brennstoffe integriert, wobei die Brennstoffe dann über geeignete Strukturen an die Elektroden herangeführt werden. Für einen solchen Brennstoffzellenaufbau nach Stand der Technik ist es nun aber notwendig, daß die Platten aus elektrisch leitfähigem Material bestehen, da jede Platte auf die jeweilige Elektrodenfläche drücken muß, um den elektrischen Anschluß der Zelle nach außen darzustellen. Im Falle einer Stackbauweise können die Platten auch als bipolare Platten ausgeführt sein.

Zur Erreichung höherer Leistungen und besonders zur Erreichung einer höheren Spannung ist es auch bekannt, mehrere Membran-Elektroden-Einheiten, wie vorstehend beschrieben, zu einem sogenannten Brennstoffzellenstack zusammenzuschalten (US 4,175,165 "Fuel cell system utilizing ion exchange membranes and bipolar plates"). Dazu wurden bisher eine Vielzahl solcher, wie vorstehend beschriebener, Zellen separat aufgebaut, hintereinander angeordnet und elektrisch in Reihe verschaltet, so daß sich die Spannungen der Einzelzellen addieren. Der konstruktionstechnische Aufwand einer derartigen Reihenschaltung ist jedoch sehr hoch, da jede Membran-Elektroden-Einheit eine separate Brennstoffversorgung aufweisen muß. Dadurch resultiert ein sehr hoher konstruktionstechnischer Aufwand für diese Zellen.

Ausgehend hiervon ist es die Aufgabe der vorliegenden Erfindung, eine PEM-Brennstoffzelle anzugeben, die neben hohen Ausgangsspannungen, einen sehr einfachen und kostengünstigen Aufbau aufweist.

Die Aufgabe wird durch die kennzeichnenden Merkmale des Anspruches 1 gelöst. Die Unteransprüche zeigen vorteilhafte Weiterbildungen auf.

Erfindungsgemäß wird somit vorgeschlagen, eine PEM-Brennstoffzelle aus sogenannten Streifenmembranen und daran beidseitig kontaktierte Platten aus elektrisch nichtleitendem Material aufzubauen, wobei der Stromabgriff durch separate nach außen geführte leitfähige Strukturen erfolgt.

Durch den Einsatz von elektrisch nichtleitenden Platten wird nun erreicht, daß Streifenmembrane in einer PEM-Zelle eingesetzt werden können, ohne daß ein Kurzschluß der einzelnen Zellen einer Streifenmembran untereinander erfolgt. Erfindungswesentlich ist somit die Verwendung von neuartigen Streifenmembranen und deren Kontaktierung mit Platten, die als Wärmeaustauscher und als Brenngaszufuhreinrichtung dienen, aus elektrisch nichtleitfähigem Material. Dadurch lassen sich nun PEM-Brennstoffzellen mit einem einfachen Aufbau und einer hohen Ausgangsspannung realisieren. Die Spannung läßt sich dann noch einmal steigern, wenn sogenannte Brennstoffzellenstacks durch Hintereinanderschalten von mehreren Einzelzellen mit dem vorstehend beschriebenen Aufbau realisiert werden.

Die erfindungsgemäß eingesetzte Streifenmembran besteht aus speziell verschalteten Einzelzellen. Zum einen ist es dabei möglich, daß die Einzelzellen entweder über elektronisch leitfähige Bezirke (Anspruch 14) oder durch eine treppenförmige Anordnung (Anspruch 13) in Reihe verschaltet werden.

Für die erste Ausgestaltung der Streifenmembrane erfolgt die Verschaltung in der Weise, daß flächig nebeneinander angeordnete Bezirke mit unterschiedlicher Leitfähigkeit vorgesehen sind.

Ein Bezirk wird dabei durch die Einzelzelle selbst gebildet. Die Einzelzelle besteht dabei, um die Ionenleitfähigkeit zu gewährleisten, aus einem ionenleitfähigen Material. Dazu werden polymere Festelektrolyten in Form von Membranen eingesetzt. Da entweder Kationen oder Anionen transportiert werden müssen, muß die Membrane entweder für Kationen oder für Anionen permeabel sein. Die Ionenleitfähigkeit ist dabei in wässriger Umgebung für kationenleitende Polymere im allgemeinen dann gegeben, wenn im Polymer fest verankerte, d.h. im allgemeinen durch chemische Bindung verankerte Carbonsäuregruppen und/oder Sulfonsäuregruppen und/oder Phosphonsäuregruppen vorhanden sind. Für anionenleitende Polymer ist die Ionenleitfähigkeit insbesondere dann gegeben, wenn das Polymer Aminogruppen, quartäre Ammoniumgruppen oder Pyridiniumgruppen enthält. Die Fähigkeit der Ionenleitfähigkeit wird bei den bisher beschriebenen Möglichkeiten dadurch erzeugt, daß in der Membran fest verankerte Ionen existieren oder bei Quellung in Wasser erzeugt werden.

Beispiele für kationenleitende Polymere dieses Typs sind sulfonierte Polysulfone, Polyethersulfone oder auch Polyetherketone.

Die Dicke der Membran kann dabei im Bereich zwischen 0,5 µm und 1 mm, bevorzugt im Bereich von 10 µm bis 200 µm liegen. Die Flächen der Membran für die Einzelzelle richten sich dabei nach der geforderten Leistung des Stacks. Die Flächen können im Bereich von 1mm² bis 1 000 000 mm² liegen, bevorzugt im Bereich von 100 bis 10 000 mm².

Um die Funktion als Einzelzelle zu ermöglichen, sind nun die vorstehend beschriebenen Membranen beidseitig mit Elektrodenmaterial beschichtet. Da an den Elektroden die elektrochemischen Umsetzungen der Zelle erfolgen, können die Elektroden entweder selbst aus dem Material bestehen, das elektrochemisch umgesetzt wird, oder aus Material, welches die elektrochemische Umsetzung katalysiert. Das Material muß elektronisch leitfähig sein und besteht insbesondere aus Metallen, Metalloxiden, Mischoxiden, Legierungen, Kohlenstoff, elektronisch leitfähigen Polymeren oder Mischungen hieraus.

Die Materialien können Zusatzstoffe enthalten, die der Einstellung von Hydrophilie, Hydrophobie dienen. Damit können die Elektrodenschichten beispielsweise mit wasserabweisenden Eigenschaften ausgestattet werden. Weiter sind Zusatzstoffe möglich, die die Einstellung einer gewissen Porosität erlauben. Dies ist insbesondere dann von Bedeutung, wenn gasförmige Stoffe katalytisch an den Elektroden umgesetzt werden, wobei ein Dreiphasenkontakt zwischen Gas, Katalysator und ionenleitfähigem Bezirk erforderlich ist. Weiter können sog. Binder zugemischt werden, die die stabile und funktionsfähige Anbindung der Elektrode an den ionenleitenden Bezirk erleichtert.

Diese so aufgebaute Einzelzelle wird nun mit Hilfe von flächigen elektronisch leitfähigen Bezirken mit anderen Einzelzellen elektrisch in Reihe geschaltet.

Die elektronenleitenden Bezirke haben die Aufgabe, eine elektronische Leitfähigkeit zwischen jeweils einer Elektrodenfläche einer Einzelzelle und der auf der anderen Seite der Membran angeordneten Elektrodenfläche der nächsten Einzelzelle herzustellen.

Für die elektronisch leitfähigen Bezirke werden Materialien verwendet, die anstelle der Ionenleitfähigkeit der Einzelzelle nun eine Elektronenleitfähigkeit aufweisen. Die Funktion der Streifenmembran ist dabei unabhängig von bestimmten Polymermaterialien für die elektronenleitenden Bezirke, so lange die Fähigkeit der Materialien zur Elektronenleitfähigkeit gegeben ist. Die Elektronenleitfähigkeit bei polymeren Materialien kann erreicht werden, indem Polymere eingesetzt werden, die von ihrem molekularen Aufbau her befähigt sind, Elektronenleitfähigkeit zu erreichen, wie dies z.B. bei Polyacetylen oder Polythiophenen der Fall ist.

Die Elektronenleitfähigkeit kann auch erzeugt werden, indem ein gewisser Anteil leitfähiger Substanzen zu einem nichtleitenden Polymer zugemischt wird. Bei den leitfähigen Substanzen handelt es sich insbesondere um Leitfähigkeitsruß, Graphit, Kohlenstoff-Fasern, Partikel oder Fasern von elektronisch selbst leitfähigen Polymeren, Metallteilchen, -flocken oder -fasern oder metallisierte Trägermaterialien.

Die Polymere können Zusatzstoffe zur Veränderung des Quellverhaltens in Wasser enthalten. Dies ist insbesondere dann von Bedeutung, wenn die Membran in wäßrige Umgebung eingesetzt wird. Hier quellen mit geladenen Gruppen versehene, ionisch leitfähige Bezirke der Membran, was sich in einer Änderung der geometrischen Maße bemerkbar macht. Andere Bezirke, die nicht mit geladenen chemischen Gruppen versehen sind, quellen dagegen kaum, so daß sich mechanische Spannungen an den Grenzflächen beider Schichten ergeben. Um dies zu vermeiden, kann den nicht mit geladenen Gruppen versehenen Bezirken ein Zusatzstoff beigemengt werden, der das Quellungsverhalten beider anpaßt.

Erfindungswesentlich ist nun, daß die vorstehend beschriebenen Einzelzellen über die elektronisch leitfähigen Bezirke in Reihe geschaltet werden. Dazu wird entweder die untere Elektrodenfläche einer Membran einer Einzelzelle über die elektronisch leitfähigen Bezirke mit der folgenden Einzelzelle, und zwar hier mit der oberen Elektrodenfläche verbunden. Umgekehrt ist es natürlich genauso möglich, daß die obere Elektrodenfläche einer ersten Einzelzelle über den elektronisch leitfähigen Bezirk mit der unteren Elektrodenfläche der nächsten Einzelzelle verbunden wird.

Bei einem derartigen Aufbau grenzen die elektrodenbeschichteten ionisch leitfähigen Bezirke (die einer Einzelzelle entsprechen) direkt an die elektronisch leitfähigen Bezirke. Um zu vermeiden, daß an dieser Grenze die beschichtete Ober- und Unterseite des ionisch leitfähigen Bezirks durch die elektronisch leitfähigen Bezirke kurzgeschlossen werden, was den Ausfall der Einzelzelle bedeutet, dürfen die Elektrodenbeschichtungen nicht bis an den Rand des ionisch leitfähigen Materials aufgebracht sein. Es darf jeweils nur die obere oder die untere Elektrodenbeschichtung einer Einzelzelle mit dem benachbarten elektrisch leitfähigen Bezirk elektrisch leitfähig verbunden sein. Dies wird erreicht, in dem auf der einen Seite des ionenleitenden Bezirks der Bereich zwischen Elektrodenbeschichtung und elektronisch leitfähigem Bezirk mit elektronisch leitfähigen Strukturen beschichtet wird, so daß eine wie oben beschrieben definierte elektrische Verschaltung der einzelnen Membranbezirke möglich wird. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Dadurch wird nun eine In-Reihe-Schaltung der einzelnen Einzelzellen über die elektronisch leitfähigen Bezirke erreicht. Die Abmessungen des elektronisch leitfähigen Bezirks entsprechen dabei in Dicke und Breite in etwa denen der Einzelzelle, so daß insgesamt eine flächige Streifenmembran entsteht, die aus periodisch wiederholten Bezirken, nämlich einerseits aus der Einzelzelle und andererseits aus den elektronisch leitfähigen Bezirken besteht.

Nach einer bevorzugten Ausführungsform wird nun vorgeschlagen, daß zwischen den Einzelzellen und den elektronisch leitfähigen Bezirken Isolationsbezirke angeordnet sind. Die Abmessungen (Dicke, Breite) entsprechen dabei in etwa denen der Einzelzelle bzw. des leitenden Bezirks.

Diese Bezirke dienen zur elektrischen Isolation zwischen den unterschiedlich leitfähigen Bezirken. Sie bestehen deshalb aus sowohl ionisch als auch elektronisch nicht leitfähigem Polymermaterial. Die Funktion der Streifenmembran ist dabei unabhängig von bestimmten Polymermaterialien für die nichtleitenden Bezirke, so lange die Materialien weder ionen- noch elektronenleitend sind. Es kommen deshalb solche Polymermaterialien zum Einsatz, die weder unter die Kategorie "Materialien für die ionenleitfähigen Bezirke der Membraneinheiten" noch unter die Kategorie "Materialien für die elektronisch leitfähigen Bezirke" fallen.

Beim Aufbau der Membran mit Isolationsbezirken können im Gegensatz zum Aufbau ohne Isolationsbezirke die Elektrodenbeschichtungen die gleiche Fläche besitzen wie die ionenleitenden Membranen.

Zur In-Reihe-Schaltung bei dieser Ausgestaltung der Erfindung muß dann gewährleistet sein, daß eine Verbindung über die elektronisch leitfähigen Bezirke mit der unteren bzw. oberen Elektrodenfläche der Einzelzellen gewährleistet ist. Dies wird dadurch ermöglicht, daß die Streifenmembran in bestimmten Bereichen, und zwar auf der oberen bzw. unteren Membranfläche des Isolationsbezirks mit elektronisch leitfähigen Strukturen beschichtet wird, so daß eine definierte elektrische Verschaltung der einzelnen Membranbezirke möglich wird, und zwar in der Weise, daß jeweils eine Elektrodenfläche einer Einzelzelle mit der auf der anderen Seite der Membran angeordneten Elektrodenfläche der nächsten Einzelzelle verbunden ist. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Eine Streifenmembran, die nach der bevorzugten Ausführungsform noch zusätzlich Isolationsbezirke aufweist, ist demnach aus sich periodisch wiederholenden Bezirken der Einzelzelle, dem Isolationsbezirk und dem elektronisch leitenden Bezirk aufgebaut. Die Streifenmembran besteht bevorzugt aus 2 bis 300 Einzelzellen.

Bei der Ausführungsform mit dem treppenförmigen Verhalten wird die In-Reihe-Schaltung dadurch erreicht, daß die Elektrodenfläche einer Einzelzelle gleichzeitig die Aufgabedes elektronisch leitfähigen Bezirks übernimmt. Ein separater elektronisch leitfähiger Bereich entfällt in diesem Fall ebenso wie Isolationsbezirke. Um eine In-Reihe-Schaltung zweier Einzelzellen in diesem Fall zu gewährleisten, überlappen die Zellen derart, daß der Randbereich einer Elektrodenfläche der ersten Einzelzelle direkt mit dem Randbereich der Elektrodenfläche auf der anderen Membranseite der nächsten Einzelzelle elektronisch leitend verbunden ist. Es entsteht in diesem Fall eine Streifenmembran, bei der die einzelnen Einzelzellen treppenförmig überlappend aneinandergereiht sind. Der Aufbau der Einzelzelle entspricht der vorstehend beschriebenen Art.

Die wie vorstehend beschriebene Streifenmembran, wird erfindungsgemäß mit Platten, die aus nichtelektronisch leitendem Material gefertigt sind, kontaktiert. Dadurch wird ein Kurzschluß der einzelnen elektronisch leitfähigen Bezirke ein jeder Streifenmembran untereinander vermieden.

Da die Platten nichtleitend sind, muß ein Stromabgriff sichergestellt werden.

Für PEM-Brennstoffzellen, die lediglich eine Streifenmembran aufweisen (Einzelzelle), ist nun vorgesehen, daß der nötige Stromabgriff mittels gesonderter separater elektronisch leitfähiger Strukturen erfolgt. Diese Strukturen werden nach oben bzw. nach unten aus der Brennstoffzelle herausgeführt. Die Strukturen sind dabei jeweils zwischen den Endplatten und einer Elektrodenfläche der Streifenmembran angeordnet. Die Platten fungieren in diesem Fall dann als Endplatten.

Für einen Brennstoffzellenstack ist nun eine Modifizierung der vorstehend beschriebenen Einzelzelle nötig. Da ja auch eine Stromleitung der hintereinandergeschalteten einzelnen Streifenmembrane sichergestellt sein muß, wird erfindungsgemäß vorgeschlagen, beim Brennstoffzellenstack die einzelnen Streifenmembrane durch elektronisch leitfähige Strukturen untereinander zu verbinden, der Stromabgriff kann dann, wie vorstehend bereits bei der Einzelzelle beschrieben, durch separate, aus der Brennstoffzelle herausgeführte, elektronisch leitfähige Strukturen (Stromableiter) erfolgen. Diese Stromableiter sind vorteilhafterweise zwischen den Endplatten und einer Elektrodenfläche der endständigen Streifenmembran angeordnet. Die erfindungsgemäß vorgeschlagenen Platten fungieren beim vorstehend beschriebenen Brennstoffzellenstack zum einen für die innenliegenden Streifenmembrane als mittelständige Platten und als Endplatten.

Eine weitere bevorzugte Ausführungsform schlägt vor, daß auf die Elektrodenflächen der Elektroden der einzelnen Streifenmembranen zur Erhöhung der Querleitfähigkeit der Elektrodenflächen zusätzlich brennstoffdurchlässige, elektronisch leitfähige Strukturen auf die Elektrodenoberfläche aufgedrückt werden. Sie haben die Aufgabe die Ohm'schen Verluste der Elektrodenflächen beim Betrieb der Zelle zu minimieren. Da sie auch gleichzeitig die Versorgung der Elektroden mit Brennstoff ermöglichen müssen, sind sie permeabel, d.h. brennstoffdurchlässig, ausgestaltet. Eine Abwandlung dieser elektronisch leitfähigen Strukturen ist so aufgebaut, daß eine Gesamtstruktur vorgesehen ist, die zum einen aus nichtleitfähigem brennstoffdurchläsigen und zum anderen aus leitfähigen Bezirken besteht. Diese Gesamtstruktur kann auch mit den für den Stromabgriff vorgesehenen Strukturen eine Einheit bilden.

Die erfindungsgemäßen Platten dienen unter anderem ja auch als Wärmeaustauscherplatten und sind deshalb mit Kühlstrukturen versehen. Diese Kühlstrukturen können in Form von Kanälen oder Hohlräumen ausgebildet sein und werden von einem entsprechenden Kühlmittel, z.B. Wasser, durchströmt. Zur Versorgung der Kühlstrukturen sind Kühlmittel-Zufuhrkanäle bzw. Kühlmittel-Abfuhrkanäle vorgesehen. Im Falle von Brennstoffzellenstacks ist es vorteilhaft, wenn die Zu- und Abfuhrkanäle nicht am Zellenäußeren münden, sondern zu Kühlwasserzentralenversorungskanälen geleitet werden. Diese Versorgungskanäle durchlaufen dann den gesamten Zellaufbau, d.h. jede Wärmeaustauscherplatte enthält entsprechende Bohrungen. Die Aneinanerreihung von mindestens zwei Platten mit diesen Bohrungen bildet dann den Kühlwasser-Versorungskanal und dieser wird von außen mit Kühlmittelversorgt bzw. führt das Kühlmittel wieder nach außen ab.

Wie bereits eingangs geschildert, besteht die Aufgabe der Platten ja nicht nur darin, daß die bei der Reaktion entstehende Hitze abgeführt wird, sondern daß gleichzeitig auch noch die Brennstoffversorgung an die Elektrodenoberflächen sichergestellt werden muß. Dafür enthalten die Platten auf der der Membran zugewandten Seite sogenannte Verteilerstrukturen, die es ermöglichen, daß möglichst sämtliche Elektrodenflächen einer Streifenmembran mit Brennstoff versorgt werden können. Diese Brennerstrukturen müssen so ausgebildet sein, daß der Brennstoff möglichst großflächig auf die Elektrodenoberfläche trifft. Dies kann beispielsweise durch großflächige Aussparungen in der Platte realisiert werden oder durch parallel angeordnete Kanalstrukturen oder durch schachbrettartig angeordnete Kanäle oder gegebenenfalls durch eine poröse Struktur der Wärmeaustauscherplatte.

Die Platten gemäß der vorliegenden Erfindung müssen dann für den Fall, daß z.B. zur Brennstoffzufuhr Kanalstrukturen vorgesehen sind, auch Brennstoffzufuhrkanäle enthalten. Über diese Brennstoffzufuhrkanäle wird dann der Brennstoff eingespeist und über die entsprechenden Verteilerstrukturen auf sämtliche Elektroden einer Membranseite verteilt. Es ist bei der vorliegenden erfindungsgemäßen Ausgestaltung auch möglich, daß die Verteilerstruktur einen zusätzlichen Brennstoffabfuhrkanal aufweist, so daß Fremd- oder Inertstoff, die sich im Zelleninneren anreichern, über diesen Abfuhrkanal ausgespült werden können.

Im Falle von Brennstoffzellenstacks ist es auch für die Brennstoffversorgung vorteilhaft, daß diese über sogenannte Versorungskanäle gewährleistet wird. Diese Versorgungskanäle durchlaufen analog der Kühlwasserversorung den gesamten Zellaufbau, d.h. jede Wärmetauscherplatte enthält entsprechende Bohrungen. Die Aneinanderreihung von mindestens zwei Platten mit diesen Bohrungen bildet dann den entsprechenden Versorgungskanal und dieser wird dann von außen mit Brennstoff versorgt bzw. führt Brennstoff nach außen ab.

Alternativ zur vorstehend beschriebenen Brennstoffversorgung mittels der Platten ist es auch möglich, daß die gesamte Platte aus porösem Material besteht und die Brennstoffzufuhr durch Hindurchleiten des Brenngases, z.B. Luft, durch dieses poröse Material erfolgt.

Die Kühlung wird in diesem Fall derart erreicht, daß die Kühlstrukturen, z.B. Rohre oder Rohrbündeln, durch die poröse Platte laufen. um die anfallende Wärme abzuführen. Die Kühlstrukturen müssen dann selbstverständlich aus einem nichtporösen Material bestehen, so daß eine Vermischung von Kühlmittel und Brennstoff vermieden wird. Der Brennstoff selbst wird bei dieser Ausführungsform der Erfindung auf der der Membran abgewandten Seite ganzflächig zugeführt und durch die poröse Struktur bis an die Elektroden weitergeleitet. Um ein Entweichen nach außen zu verhindern, muß der Rand der Platte aus nichtporösem, dichten Material bestehen. Die ganzflächige Brennstoffzufuhr kann entweder durch einfaches Anblasen (Luft) der porösen Platte erfolgen oder indem der Brennstoff durch eine zusätzliche Struktur aus der Zufuhrleitung auf die gesamte poröse Wärmeaustauscherfläche verteilt wird, ohne daß dabei ein Brennstoffaustritt an die Umgebung möglich ist.

Ein evtl. Abführen des Brennstoffes erfolgt z.B. an den Seiten der Platte, so daß ein Fluß von der Zufuhrseite durch die poröse Struktur zu den Elektroden und dann seitlich zu der einen oder zu mehreren Abführöffnungen stattfinden kann. Im einfachsten Fall bestehen die Abführöffnungen aus Öffnungen im dichten Rand der Platte, so daß die Brennstoffe durch die poröse Struktur der Platte zur Abfuhröffnung gelangen. Es können aber auch Abfuhrkanäle in der Platte vorhanden sein, d.h. leere Kanäle, die von den Elektroden nach außen führen.

Wie vorstehend geschildert, fungieren im Falle von Brennstoffzellenstacks die Platten sowohl als mittelständige Platten wie auch als endständige Platten. Der Aufbau der endständigen Platten ist analog dem vorstehend Beschriebenen. Die mittelständigen Platten (bipolare Platten) müssen dann selbstverständlicherweise auf beiden Seiten eine Verteilerstruktur aufweisen, so daß es damit möglich ist, sämtliche Elektrodenflächen der angrenzenden Streifenmembranseite mit dem jeweiligen Brennstoff zu versorgen. Der Aufbau dieser Verteilerstrukturen ist analog dem vorstehend Beschriebenen für die Endplatten. Beim Brennstoffzellenstack ist dann noch zu berücksichtigen, daß eine elektronische Leitfähgkeit der einzelnen Einzelzellen untereinander gewährleistet sein muß. Dies wird erfindungsgemäß dadurch erreicht, daß verbrückende elektronisch leitfähige Strukturen vorgesehen sind. Der Stromabgriff kann dann jeweils, wie bereits bei den Einzelzellen, durch separate aus der Brennstoffzelle nach außen geführte elektronisch leitfähige Strukturen (Stromableiter) erfolgen.

Die einzelnen Zellkomponenten, d.h. die Platten, die Streifenmembran und die Stromableiter werden gegebenenfalls mittels Dichtungen aneinandergepreßt, um die Brennstoffdichtigkeit des gesamten Zellaufbaus zu gewährleisten. Bevorzugt werden Dichtungen zwischen Streifenmembran und Platten eingesetzt. Bei der Verwendung der vorstehend bereits beschriebenen Gesamtstrukturen zur Elektrodenquerleitfähigkeitsverbesserung kann es auch erforderlich sein, zwischen Streifenmembran und Gesamtstruktur und zwischen Gesamtstruktur und nichtleitender Platte jeweils eine Dichtung einzusetzen.

Wie vorstehend geschildert, ist es wesentlich bei der Erfindung, daß Platten aus nichtleitfähigem Material eingesetzt werden. Beispiele für solche Materialien sind nichtleitfähige Kunststoffe, aber auch keramische bzw. oxidische Werkstoffe. Es können elektrisch leitfähige Materialien verwendet werden, die nachträglich mit einer nichtleitenden Schicht überzogen werden. Dies kann beispielsweise mittels Dünnschichtverfahren, wie Plasmapolymerisation oder durch Aufbringen dünner Polymerfolien mittels Verkleben, Verschweißen oder durch Aufbringen/Verdampfen von Polymerlösungen erfolgen. Bevorzugt werden Materialien eingesetzt, die ausreichende chemische Stabilität unter Brennstoffzellenbedingungen aufweisen (z.B. stabil in Gegenwart von Wasserstoff und Sauerstoff, hydrolysestabil und temperaturstabil bis 100°C). Bei der Materialauswahl ist darauf zu achten, daß Materialien eingesetzt werden, die eine hohe Wärmeleitfähigkeit aufweisen, um somit möglichst viel Wärme aus dem Zellenaufbau abzuführen.

Die Stromableiterstrukturen bestehen ja, wie vorstehend geschildert, aus einem elektronisch leitfähigen Material. Beispiele für solche Materialien sind alle Metalle, wie beispielsweise Titan. Bei den Stromableiterstrukturen kann es sich um flexible Folien oder aber um mechanisch nichtflexible Stücke handeln. Bevorzugt eingesetzt werden Materialien, die unter Brennstoffzellenbedingungen chemisch inert sind (z.B. stabil gegenüber Wasser, Wasserstoff und Sauerstoff bis zu 100°C) und die elektrochemisch stabil gegenüber den auftretenden Potentialen sind.

Die die Elektrodenquerleitfähigkeit unterstützenden Strukturen sind, wie bereits geschildert, aus elektronisch leitfähigem Material. Beispiele für mögliche Materialien sind Metallnetze, poröse Metallstrukturen oder brennstoffdurchlässige Kohle bzw. Graphitpapiere. Bei den Strukturen kann es sich um flexible oder um nichflexible Stücke handeln. Bevorzugt eingesetzt werden hier wiederum Materialien, die unter Brennstoffzellenbedingungen chemisch inert sind.

Die die Elektrodenleitfähigkeit unterstützenden Gesamtstrukturen bestehen aus einer Aneinanderreihung von Bezirken, die elektronisch leitfähig sind und die nicht leitfähig sind. Die leitfähigen Bezirke, die den Elektrodenflächen der Streifenmembran gegenüberstehen, bestehen aus elektronisch leitfähigen Materialien, wie sie bereits vorstehend beschrieben sind.

Der Aufbau der Gesamtstruktur kann beispielsweise aus den Einzelflächen erfolgen, die mittels Klebe- oder Schweißtechnik dauerhaft miteinander verbunden sind. Alternativ können auch poröse nichtleitende Grundkörper verwendet werden, die nachträglich an den den Membranelektroden gegenüberliegenden Flächen mit nicht dichten, elektronisch leitfähigen Schichten beschichtet sind. Das Aufbringen solcher Schichten kann wiederum mit den aus dem Stand der Technik gekannten Dünnschichtprozessen, wie PVD oder CVD, erfolgen.

Weitere Merkmale, Einzelheiten und Vorzüge der Erfindung ergeben sich anhand der Zeichnungen. Hierbei zeigen :

**Figur 1**
im vertikalen Schnitt die wichtigsten Bauteile einer PEM-Brennstoffzelle nach dem Stand der Technik.

**Figur 2**
im vertikalen Schnitt den Aufbau einer erfindungsgemäßen Streifenmembran in treppenförmiger Ausführung.

**Figur 3**
eine erfindungsgemäße Ausführung einer Streifenmembran mit hintereinander angeordneten Einzelzellen.

**Figur 4**
im vertikalen Schnitt die wichtigsten Bauteile zum Aufbau einer erfindungsgemäßen PEM-Brennstoffzelle (Einzelzelle).

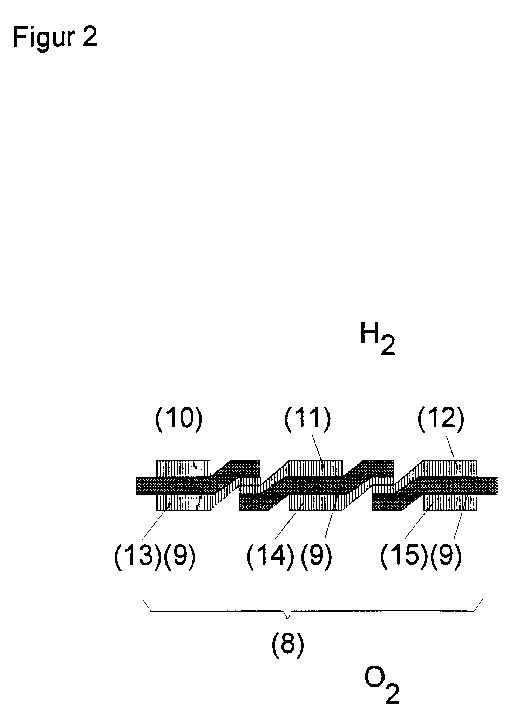

**Figur 5**
im vertikalen Schnitt eine erfindungsgemäße Streifenmembran gemäß Ausführungsform nach Figur 2 mit zusätzlichen elektronisch leitfähigen Strukturen.

**Figur 6**
eine erfindungsgemäße Streifenmembran gemäß der Ausführungsform nach Figur 2 mit einer zusätzlichen Gesamtstruktur zur Erhöhung der Querleitfähigkeit.

**Figur 7**
die wichtigsten Bauteile im vertikalen Schnitt, die zum Aufbau eines erfindungsgemäßen Brennstoffzellenstacks nötig sind.

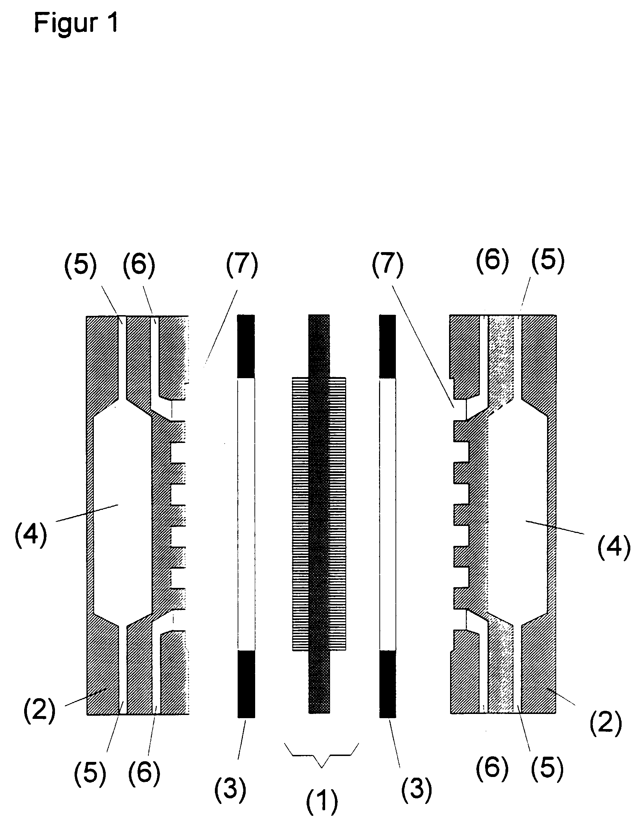

**Figur 1** zeigt im vertikalen Schnitt die wichtigsten Einzelteile, die für den Aufbau einer PEM-Brennstoffzelle nach dem Stand der Technik nötig sind. Eine PEM-Brennstoffzelle nach dem Stand der Technik (z.B. A.J. Appley, E.B. Yeager, Energy 11, 137-152 [1986]) ist dabei aus einer Membranelektroden-Einheit 1, entsprechenden Dichtringen 3 sowie elektrisch leitfähigen Endplatten 2 aufgebaut. Beide Seiten der Membran-elektroden-Einheit 1 stehen dabei im zusammengebauten Zustand mit den elektrisch leitfähigen Platten 2 in Kontakt, wobei zum Erreichen der Zelldichtigkeit dazwischenliegende Dichtringe 3 vorgesehen sind. Die leitfähigen Platten 2 sind auch im Stand der Technik als Wärmetauscher konzipiert, d.h. sie enthalten Kanäle 4, durch die eine Kühlflüssigkeit strömt. Die Kühlflüssigkeit wird dabei über in der Platte vorhandene Öffnungen 5 ein- und ausgespeist. Des weiteren sind in den elektrisch leitfähigen Platten 2 Zu- und Abfuhrkanäle 6 für die Brennstoffe integriert, wobei die Brennstoffe dann über geeignete Strukturen 7 an die Elektroden herangeführt werden. Für einen solchen Brennstoffzellenaufbau nach dem Stand der Technik ist es notwendig, daß die Platten 2 aus elektrisch leitfähigem Material bestehen, da jede Platte auf die jeweilige Elektrodenfläche der Membranelektroden-Einheit 1 drücken muß, um den elektrischen Anschluß der Zelle nach außen darzustellen. Im Falle einer Stackbauweise können die Platten 2 auch als bipolare Platten ausgeführt sein.

**Figur 2** zeigt nun im vertikalen Schnitt eine erfindungsgemäße Ausführungsform der Streifenmembran. Die Streifenmembran 8 nach der Ausführungsform nach Figur 2 ist treppenförmig ausgestaltet. Die Streifenmembran 8 besteht danach aus einer Anzahl von ionisch leitfähigen festen Polymermembranbezirken 9, wobei jede Seite eines Membranbezirkes 9 mit einer Elektrodenstruktur beschichtet ist. Im Falle einer Wasserstoff/Sauerstoffbrennstoffzelle ist also jeder ionisch leitfähige Membranbezirk 9 mit einer Wasserstoffelektrode 10, 11, 12 und einer Sauerstoffelektrode 13, 14, 15 beschichtet und arbeitet als Brennstoffzelleneinheit. Je zwei benachbarte Membranbezirke sind dabei aneinander gebunden, indem die untere Elektrode 13 des ersten Membranbezirkes mit der oberen Elektrode 11 des zweiten Membranbezirkes elektronisch leitfähig, gasdicht und dauerhaft miteinander verbunden ist. Auf diese Weise erfolgt eine membraninterne Reihenschaltung aller Brennstoffzelleneinheiten in der Membran 8 und die Gesamtspannung kann an der ersten Elektrode 10 der oberen Membranseite und der letzten Elektrode 15 der unteren Membranseite abgegriffen werden. Die in Fig. 2 dargestellte Streifenmembran 8 liefert gegenüber einer Einzelzelle eine dreimal so hohe Ausgangsspannung, da sie drei beschichtete, ionisch leitfähige Membranbezirke enthält. Trotzdem benötigt eine solche Streifenmembran 8 nur eine Brennstoffversorung für die obere Membranseite (Wasserstoff in Fig. 2) und nur eine Brennstoffversorgung für die untere Membranseite (Sauerstoff in Fig. 2).

Bei der erfindungsgemäß vorgeschlagenen Streifenmembran 8 besteht zwar auch die Notwendigkeit, wie bei herkömmlichen Membranelektroden, die Wärme abzuführen. Erfindungsgemäß wird aber nun für die Wärmeabfuhr der drei Einheiten lediglich eine Platte benötigt. Allerdings ist es nun nicht mehr möglich, die bisher nach dem Stand der Technik verwendeten elektronisch leitfähigen Platten zu verwenden, da es ja ansonsten zu einem Kurzschluß kommen würde. Erfindungsgemäß werden deshalb elektronisch nichtleitfähige Platten eingesetzt.

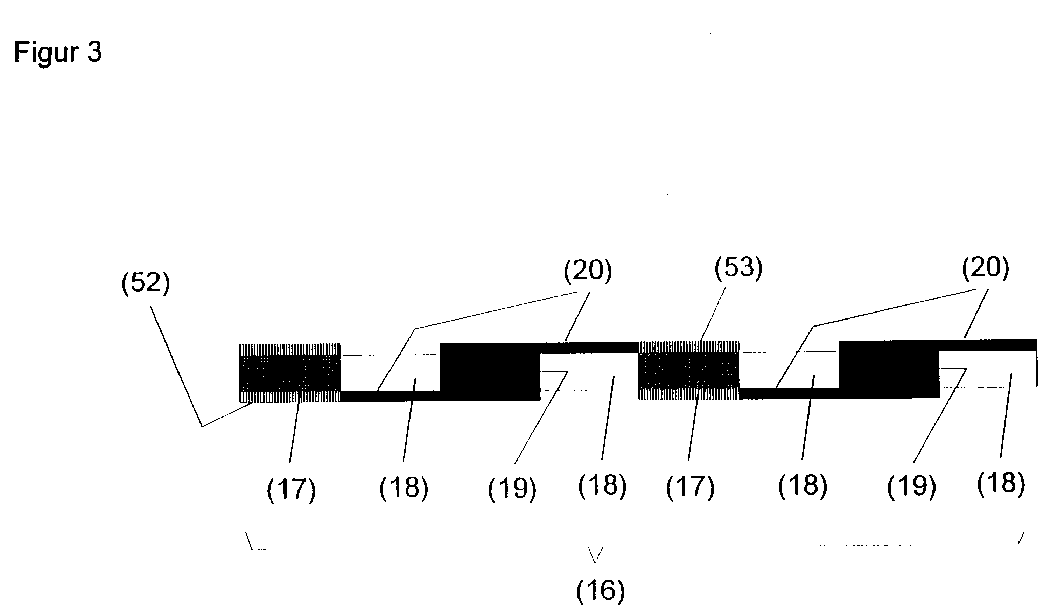

**Figur 3** zeigt nun ebenfalls im Schnitt eine Streifenmembran 16, wobei hier die Streifenmembran in Form von hintereinander angeordneten Einzelzellen 17 aufgebaut ist. Die jeweiligen Einzelzellen 17 sind dabei durch Isolationsbezirke 18 von einander getrennt. Zwischen diesen Bezirken 18 sind rein elektronisch leitende Bezirke 19 angeordnet. Entscheidend bei dieser Streifenmembran ist, daß die untere Elektrodenfläche 52 der ersten Einzelzelle 17 über eine elektronisch leitfähige Beschichtung 20 mit der oberen Elektrodenfläche 53 der nächsten Einzelzelle 17 in Reihe verschaltet ist. Die periodische Abfolgung derartiger in Fig. 3 im Querschnitt abgebildeter Einheiten bildet eine Streifenmembran.

Diese erfindungsgemäße Streifenmembran kann ebenso, wie vorstehend für die treppenförmige Ausgestaltung schon beschrieben, mit den Wärmeaustauscherplatten aus nichtelektronisch leitfähigem Material zu einer PEM-Brennstoffzelle aufgebaut werden.

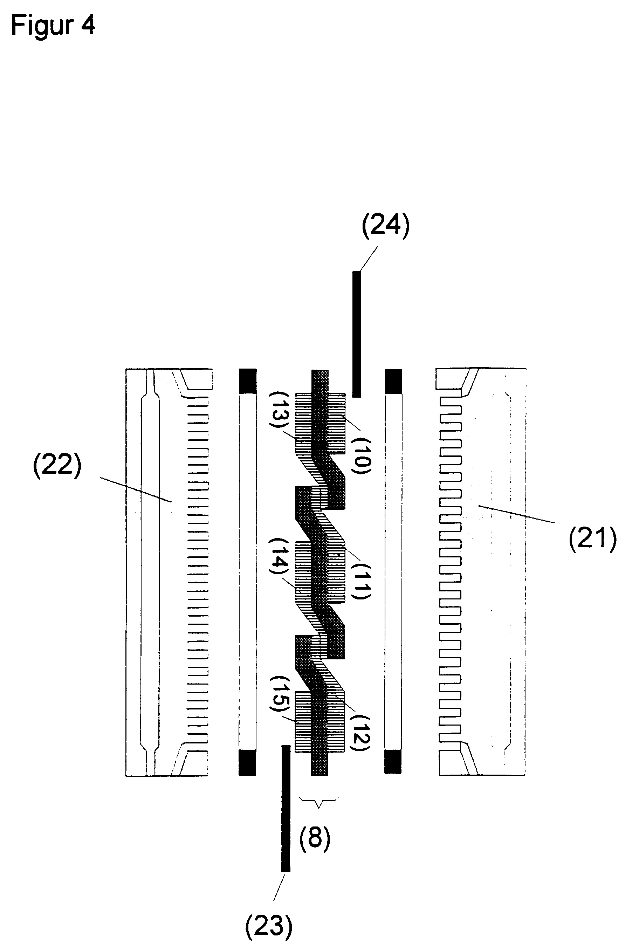

**Figur 4** zeigt nun im vertikalen Schnitt die wichtigsten Einzelteile für den Aufbau einer erfindungsgemäßen PEM-Brennstoffzelle. Die Ausführungsform nach Fig. 4 zeigt nun eine PEM-Brennstoffzelle, die aus einer Streifenmembran 8 besteht. Der Aufbau der Streifenmembran 8 entspricht dem Aufbau der Streifenmembran nach Fig. 2. Im Unterschied zum Stand der Technik (siehe Fig. 1) werden nun Platten 21, 22 aus elektronisch nichtleitfähigem Material bzw. mit elektronisch nichtleitfähiger Oberfläche eingesetzt. Das Abgreifen der elektrischen Spannung von der Membran 8 erfolgt durch nach außen geführte elektronisch leitfähige Strukturen 23, 24 (Stromableiter). Diese Stromableiter 23, 24 sind für den jeweils verwendeten Brennstoff nicht permeabel und mit der ersten Elektrode 10 bzw. der letzten Elektrode 15 der Streifenmembran 8 elektrisch verbunden.

Der Aufbau der Platten 22, 21 in bezug auf die Wäremeaustauscherstrukturen und die Brennstoffzufuhr entspricht im wesentlichen dem nach Fig. 1.

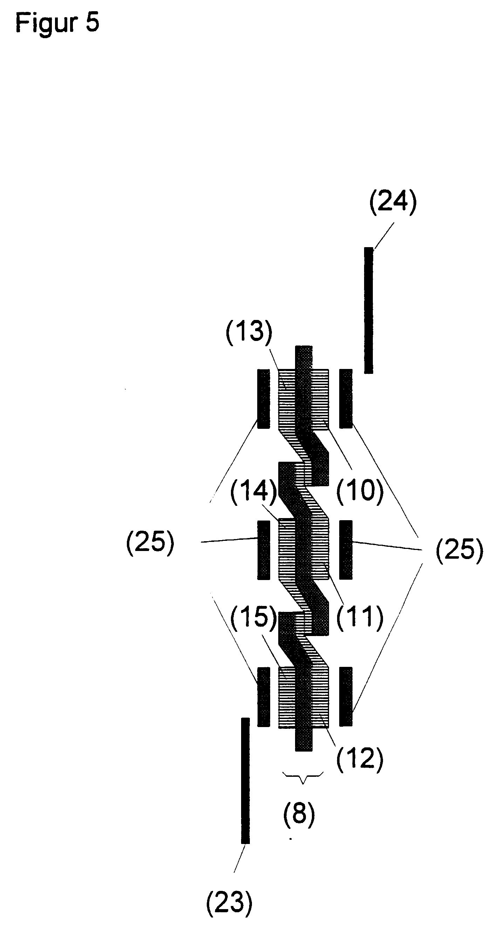

Typischerweise werden zur Erhöhung der Querleitfähigkeit der Elektrodenflächen der Streifenmembran 8 zusätzlich brennstoffdurchlässige, elektronisch leitfähige Strukturen 25 eingesetzt. Dies ist in **Fig. 5** schematisch im Schnitt dargestellt. Diese elektronisch leitfähigen Strukturen 25 werden erfindungsgemäß auf die Elektrodenflächen 10 bis 12 bzw. 13 bis 15 der Streifenmembran 8 aufgedrückt. Sie haben die Aufgabe, die Ohm'schen Verluste der Elektrodenflächen beim Betrieb der Zelle zu minimieren, müssen aber gleichzeitig eine Versorgung der Elektroden mit dem Brennstoff ermöglichen, d.h. sie müssen permeabel für den Brennstoff sein.

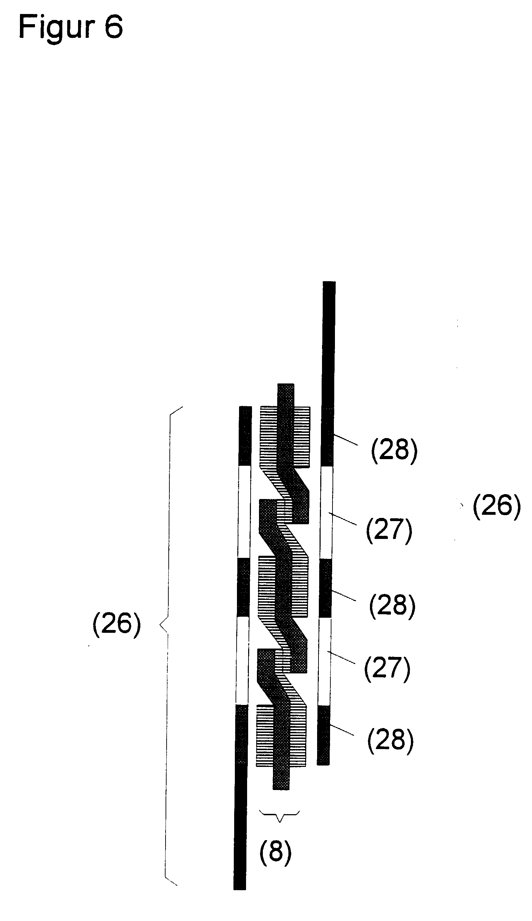

Eine weitere Variante der Erfindung (**Fig. 6**) schlägt nun vor, die leitfähigen Strukturen 25 nach Fig. 2 in Form einer Gesamtstruktur 26 auszubilden. Diese Gesamtstruktur besteht dabei aus sich abwechselnden nichtleitfähigen Bezirken 27 und brennstoffdurchlässigen leitfähigen Bezirken 28. Die Gesamtstruktur 26 ist dabei so angeordnet, daß jeweils die leitfähigen und permeablen Bezirke 28 auf den Elektrodenoberflächen der Streifenembran 8 angeordnet sind. In diese Gesamtstruktur können auch noch die Stromableiter 23, 24, wie gezeigt, integriert sein, so daß eine einstückige Gesamtstruktur vorliegt.

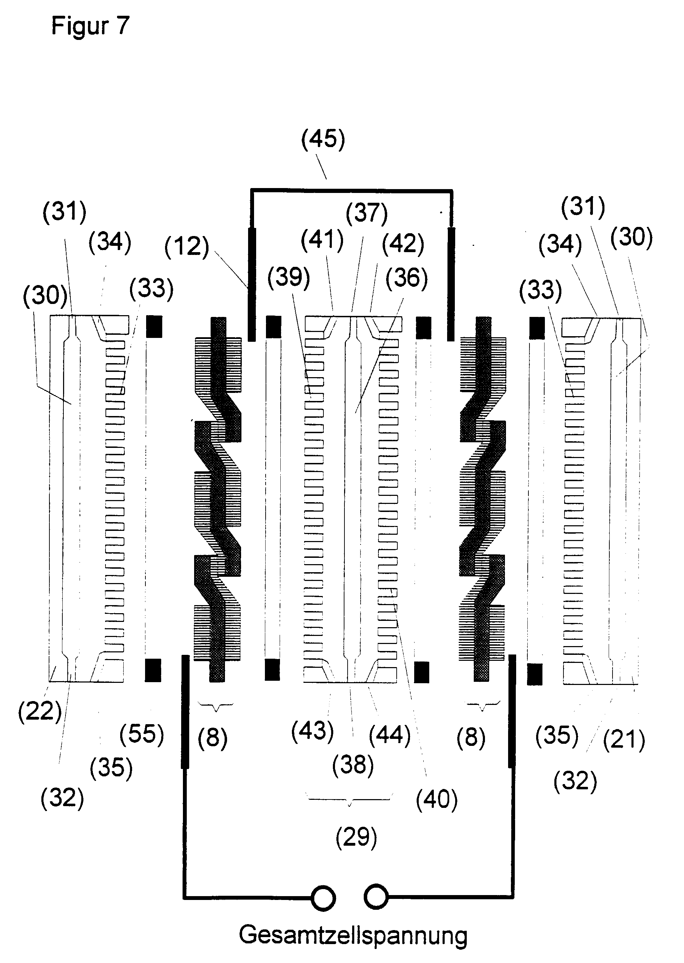

**Figur 7** zeigt nun im Schnitt die wichtigsten Bauteile, die für den erfindungsgemäßen Aufbau eines Brennstoffzellenstacks notwendig sind. Fig. 7 zeigt hier nun beispielhaft einen Brennstoffzellenstack bestehend aus zwei Streifenmembranen 8, zwei als Wärmeaustauscher ausgebildeten Endplatten 21 und 22 sowie eine als Wärmeaustauscher ausgebildete mittelständige Platte 29. Die Endplatten 21 und 22 weisen dabei, wie es aus dem Stand der Technik bisher schon bekannt war, Kühlstrukturen 30 auf, die von einem entsprechenden Kühlmittel, z.B. Wasser, durchströmt werden.

Bei diesen Kühlstrukturen kann es sich beispielsweise um Kanäle oder Hohlräume in der Wärmeaustauscherplatte 21 bzw. 22 handeln. Die Kühlstrukturen sind mit einem Kühlmittelzufuhrkanal 31 verbunden, über den von außen das Kühlmittel eingespeist wird und die Kühlstruktur 30 durchläuft. Über einen Kühlmittelabfuhrkanal 32 verläßt das Kühlmittel die Wärmeaustauscherplatte 21 bzw. 22. Des weiteren ist es möglich, daß die Zu- und Abfuhrkanäle 31, 32 nicht am Zellenäußeren münden, sondern zunächst zu sogenannten Kühlwasserversorgungskanälen (nicht abgebildet) führen. Diese Versorgungskanäle durchlaufen dann den gesamten Zellenaufbau, d.h. jede Wärmeaustauscherplatte enthält entsprechende Bohrungen. Die Endplatten 21 und 22 aus nichtleitfähigem elektronischen Material enthalten dann zusätzlich zur Versorgung der Elektroden sogenannte Verteilerstrukturen 33, die es ermöglichen, daß sämtliche Elektrodenflächen auf der Seite der Streifenmembran 8 mit Brennstoff versorgt werden können. Bei dieser Struktur kann es sich um eine großflächige Aussparung in der Platte 21, 22 handeln oder um parallel angeordnete Kanalstrukturen oder um schachbrettartig angeordnete Kanäle oder um eine an dieser Stelle poröse Struktur der Wärmeaustauscherplatte. Ergänzend können dann noch Zu- und Abfuhrkanäle 34 und 35 vorgesehen sein. Auch hierfür ist es bei der Stackbauweise vorgesehen, daß zentrale Versorgungskanäle für die Brennstoffzufuhr vorgesehen sind.

Die mittelständige Platte 29 ist analog aufgebaut. Die mittelständige Platte 29 enthält ebenfalls Kühlstrukturen 36 mit entsprechenden Zu- und Abfuhrkanälen 37, 38 und analoge Verteilerstrukturen 39, 40. Diese Brennerstrukturen 39 und 40 können auch wieder über separate Zu- und Abfuhrkanäle 41 bis 44 verbunden sein.

Zur Herstellung der elektronischen Verschaltung ist es bei der Stackbauweise noch erforderlich, daß die einzelnen Streifenmembranen 8 durch spezielle elektronisch leitfähige Strukturen 45 hintereinander geschaltet werden.

Zur Sicherung der Dichtigkeit sind zum Aufbau der Zelle noch Dichtungen 55 notwendig.

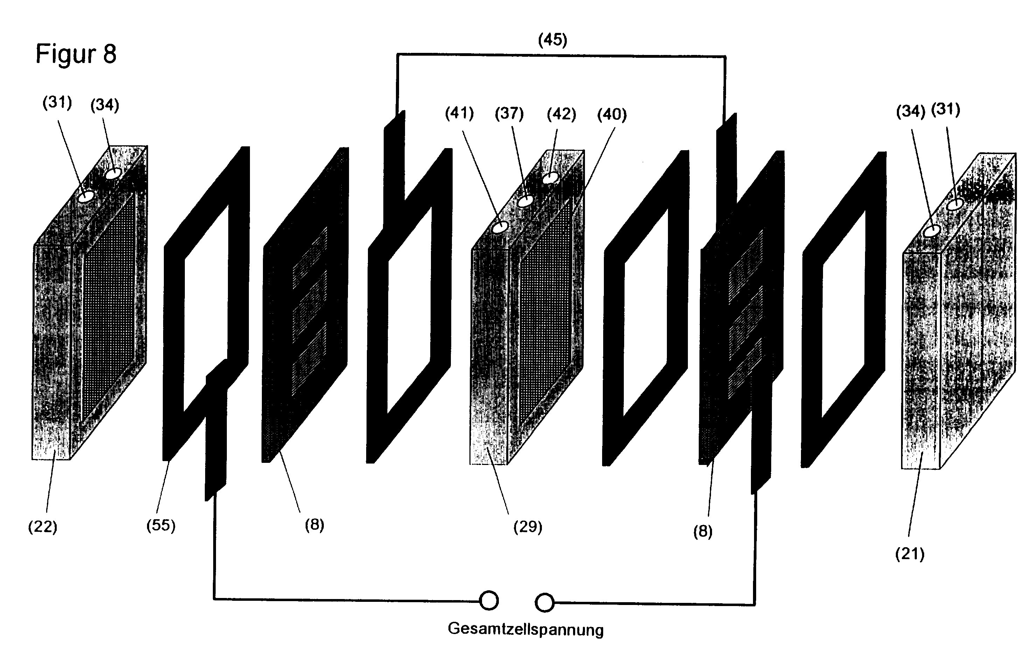

**Figur 8** zeigt nun den kompletten Aufbau einer erfindungsgemäßen Brennstoffzelle analog **Figur 7**.

## Patentansprüche

1. PEM-Brennstoffzelle, bestehend aus mindestens einer Streifenmembran (8, 16), die aus mindestens 2, höchstens 10.000 flächigen Einzelzellen jeweils aus einem beidseitig auf einer Membran (9) aus einem polymeren Festelektrolyten aufgebrachten Elektrodenschicht (10-12, 13-15, 53) besteht, wobei die Einzelzellen in Reihe geschaltet sind und aus ausnichtleitendem Material gefertigten Platten (21, 22, 29), die als Wärmeaustauscher und als Brenngaszuführeinrichtung dienen, die beidseitig an der Streifenmembran (8, 16) kontaktiert sind und separaten nach außen geführten leitfähigen Strukturen (23, 24) zum Spannungsabgriff bestehen.

2. PEM-Brennstoffzelle nach Anspruch 1,
dadurch **gekennzeichnet,** daß eine Streifenmembran (8, 16) vorgesehen ist und die Platten (21, 22) als Endplatte fungieren.

3. PEM-Brennstoffzelle nach Anspruch 1,
dadurch gekennzeichnet, daß zwei bis 2.000 Streifenmembrane (8, 16) in Form eines Brennstoffzellenstacks aufgebaut sind, wobei die Einzelzellen untereinander elektrisch leitend verbunden sind und die Platten (21, 22, 29) sowohl als mittelständige Platten wie auch als Endplatten fungieren.

4. PEM-Brennstoffzelle nach mindestens einem der Ansprüche 1 bis 3,
dadurch gekennzeichnet, daß auf der Streifenmembran (8,16) auf den Elektrodenflächen zumindest teilweise elektronisch leitende Strukturen (25) angeordnet sind.

5. PEM-Brennstoffzelle nach Anspruch 4,
dadurch gekennzeichnet, daß die elektronisch leitenden Strukturen als Gesamtstrukturen (26) ausgebildet sind, bestehend aus sich abwechselnden nichtleitfähigen Bezirken (27) und brennstoffdurchlässigen leitfähigen Bezirken (28), wobei die leitfähigen Bezirke (28 ) auf der Elektrodenfläche angeordnet sind.

6. PEM-Brennstoffzelle nach Anspruch 4 oder 5,
dadurch gekennzeichnet,
daß die elektronisch leitfähigen Strukturen (25) bzw. die Gesamtstrukturen (26) und die für den Spannungsabgriff vorgesehenen Strukturen (23, 24) einstückig sind.

7. PEM-Brennstoffzelle nach mindestens einem der Ansprüche 1 bis 6,
dadurch gekennzeichnet, daß die Platten (21, 22, 29) auf der der Streifenmembran zugewandten Seite Brennstoff-Verteilungsstrukturen (33, 39, 40) aufweisen.

8. PEM-Brennstoffzelle nach mindestens einem der Ansprüche 1 bis 7,
dadurch gekennzeichnet, daß die Platten (21, 22, 29) aus porösem Material gefertigt sind, so daß die Brenngaszufuhr durch die Poren erfolgen kann.

9. PEM-Brennstoffzelle nach mindestens einem der Ansprüche 1 bis 8,
dadurch gekennzeichnet, daß die Platten (21, 22, 29) Kanäle und/oder Hohlräume (30, 36) für den Kühlmittelfluß aufweisen.

10. PEM-Brennstoffzelle nach mindestens einem der Ansprüche 2 bis 9,
dadurch gekennzeichnet, daß im Falle der Stackbauweise zentrale Versorgungskanäle für den Kühlmittelfluß vorgesehen sind.

11. PEM-Brennstoffzelle nach mindestens einem der Ansprüche 1 bis 9,
dadurch gekennzeichnet, daß die Brennstoffversorgung für die Brennstoff-Verteilungsstrukturen (33, 39,40) über geeignete Kanäle und/oder Hohlräume und/oder Porenstrukturen erfolgt.

12. PEM-Brennstoffzelle nach mindestens einem der Ansprüche 1 bis 11,
dadurch gekenzeichnet, daß zwischen den Platten (21, 22, 29) und der Streifenmembran (8, 16) Dichtungen (55) angeordnet sind.

13. PEM-Brennstoffzelle nach mindestens einem der Ansprüche 1 bis 12,
dadurch gekennzeichnet, daß die Streifenmembran (8) aus Einzelzellen besteht, die treppenförmig unter teilweise Überlappung ihrer Elektrodenflächen (10-12, 13-15) verbunden sind.

14. PEM-Brennstoffzelle nach mindestens einem der Ansprüche 1 bis 12,
dadurch gekennzeichnet, daß die Streifenmembrane (16) aus Einzelzellen (17) besteht, wobei jeweils eine Elektrodenfläche (53) einer Einzelzelle (17) über einen flächigen elektronisch leitfähigen Bezirk (19 ) mit der auf der anderen Seite der Membran angeordneten Elektrodenfläche (53) der nächsten Einzelzelle (17) verbunden ist.

15. PEM-Brennstoffzelle nach Anspruch 14,
dadurch gekennzeichnet, daß zwischen den flächigen Einzelzellen (17) und den flächigen elektronisch leitfähigen Bezirken (19) ein flächiger Isolationsbezirk (18) angeordnet ist.

## Claims

1. PEM fuel cell, consisting of at least one strip membrane (8,16) which comprises at least 2, and at most 10,000 flat individual cells each comprising one electrode layer (10-12,13-15,53) applied to both sides on a membrane (9) made of a polymeric solid electrolyte, the individual cells being incorporated in series and consisting of plates (21,22,29) made of non-conductive material, which serve as a heat-exchanger and as a fuel gas feed device, and which are contacted on both sides on the strip membrane (8,16) and of separate outwardly-directed conductive structures (23,24) for voltage take-off.

2. PEM fuel cell according to claim 1,
characterised in that a strip membrane (8,16) is provided, and the plates (21,22) function as end plates.

3. PEM fuel cell according to claim 1,
characterised in that two to 2,000 strip membranes (8,16) are built up in the form of a fuel cell stack, the individual cells being electrically conductively interconnected and the plates (21,22,29) functioning both as internal plates and also as end plates.

4. PEM fuel cell according to at least one of claims 1 to 3,
characterised in that there are disposed on the strip membrane (8,16) on the electrode surfaces at least partly electronically conductive structures (25).

5. PEM fuel cell according to claim 4,
characterised in that the electronically conductive structures are in the form of overall structures (26), consisting of alternating non-conductive areas (27) and fuel-permeable conductive areas (28), the conductive areas (28) being disposed on the electrode surface.

6. PEM fuel cell according to claim 4 or 5,
characterised in that
the electronically conductive structures (25) or the overall structures (26) and the structures (23,24) provided for voltage take-off, are in one piece.

7. PEM fuel cell according to at least one of claims 1 to 6,
characterised in that the plates (21,22,29) have fuel distributing structures (33,39,40) on the side facing the strip membrane.

8. PEM fuel cell according to at least one of claims 1 to 7,
characterised in that the plates (21,22,29) are made from porous material, so that the fuel gas supply can be effected through the pores.

9. PEM fuel cell according to at least one of claims 1 to 8,
characterised in that the plates (21,22,29) have ducts and/or cavities (30,36) for the flow of coolant.

10. PEM fuel cell according to at least one of claims 2 to 9,
characterised in that in the case of the stack construction, central supply ducts are provided for the flow of coolant.

11. PEM fuel cell according to at least one of claims 1 to 9,
characterised in that the fuel supply for the fuel distributing structures (33,39,40) is effected via appropriate ducts and/or cavities and/or pore structures.

12. PEM fuel cell according to at least one of claims 1 to 11,
characterised in that seals (55) are disposed between the plates (21,22,29) and the strip membrane (8,16).

13. PEM fuel cell according to at least one of claims 1 to 12,
characterised in that the strip membrane (8) consists of individual cells which are connected in a stepped fashion, partly overlapping their electrode surfaces (10-12,13-15).

14. PEM fuel cell according to at least one of claims 1 to 12,
characterised in that the strip membrane (16) consists of individual cells (17), one electrode surface (53) in each case of an individual cell (17) being connected via a flat electronically conductive area (19) to the electrode surface (53), disposed on the other side of the membrane, of the next individual cell (17).

15. PEM fuel cell according to claim 14,
characterised in that a flat insulating area (18) is disposed between the flat individual cells (17) and the flat electronically conductive areas (19).

## Revendications

1. Pile à combustible PEM, constituée d'au moins une membrane à bandes (8, 16) qui est constituée d'au moins 2, au plus 10 000 piles individuelles plates constituées respectivement d'une couche d'électrode déposée de chaque côté d'une membrane (9) en un électrolyte polymère solide (10, 12 ; 13, 15 ; 53), où les piles individuelles sont branchées en série et sont en plaques constituées de matériau non conducteur (21, 22, 29), qui servent d'échangeur de chaleur et de dispositif d'apport de gaz combustible, qui sont appliquées de chaque côté de la membrane à bandes et sont constituées de structures séparées conductrices dirigées vers l'extérieur pour prélever le courant.

2. Pile à combustible PEM selon la revendication 1,
caractérisée en ce qu'
on prévoit une membrane à bandes (8, 16) et que les plaques (21, 22) fonctionnent comme des plaques terminales.

3. Pile à combustible PEM selon la revendication 1,
caractérisée en ce qu'
on empile deux à 2000 membranes à bandes (8, 16) sous forme d'un empilement de piles à combustible, où les piles individuelles sont reliées entre elles en communication électrique et les plaques (21, 22, 29) ainsi que les plaques intermédiaires jouent aussi le rôle de plaques terminales.

4. Pile à combustible PEM selon au moins l'une des revendications 1 à 3,
caractérisée en ce qu'
on dispose sur la membrane à bandes (8, 16) sur les faces d'électrode des structures au moins partiellement électroniquement conductrices (25).

5. Pile à combustible PEM selon la revendication 4,
caractérisée en ce qu'
les structures électroniquement conductrices sont en forme de structures globales (26) constituées de zones (27) non conductrices alternées et de zones (28) conductrices perméables au combustible, où les zones conductrices (28) sont disposées à la face des électrodes.

6. Pile à combustible PEM selon la revendication 4 ou 5,
caractérisée en ce qu'
on réalise d'une seule pièce les structures (25) électroniquement conductrices ou les structures globales (26) et les structures prévues (23, 24) pour le prélèvement de courant.

7. Pile à combustible selon au moins l'une des revendications 1 à 6,
caractérisée en ce que
les plaques (21, 22, 29) présentent sur la face dirigée vers la membrane à bande des structures de distribution de combustible (33, 39, 40).

8. Pile à combustible selon au moins l'une des revendications 1 à 7,
caractérisée en ce qu'
on réalise les plaques (21, 22, 29) en matériau poreux de sorte que l'apport de gaz combustible peut se faire par les pores.

9. Pile à combustible selon au moins l'une des revendications 1 à 8,
caractérisée en ce que
les plaques (21, 22, 29) présentent des canaux ou des espaces vides (30, 36) pour l'écoulement du moyen de refroidissement.

10. Pile à combustible selon au moins l'une des revendications 2 à 9,
caractérisée en ce que
dans le cas de la construction en empilement on prévoit des canaux d'alimentation centraux pour l'écoulement du moyen de refroidissement.

11. Pile à combustible selon au moins l'une des revendications 1 à 9,
caractérisée en ce que
l'alimentation en combustible des structures de distribution de combustible (33, 39, 40) se fait par des canaux appropriés et/ou des espaces vides et/ou des structures poreuses.

12. Pile à combustible selon au moins l'une des revendications 1 à 11,
caractérisée en ce qu'
entre les plaques (21, 22, 29) et la membrane à bandes (8, 16) on place des joints (55).

13. Pile à combustible selon au moins l'une des revendications 1 à 12,
caractérisée en ce que
la membrane à bandes (8) est constituée de piles individuelles, qui sont reliées par recouvrement partiel en marches d'escalier de leurs faces d'électrodes (10, 12 ; 13, 15)

14. Pile à combustible selon au moins l'une des revendications 1 à 12,
caractérisée en ce que
la membrane à bandes (16) est constituée de piles individuelles (17) où respectivement une face d'électrode (53) d'une pile individuelle (17) est reliée par une zone (19) électroniquement conductrice (19) à la face d'électrode (53) disposée de l'autre côté de la membrane de la pile suivante (17).

15. Pile à combustible PEM selon la revendication 14,
caractérisée en ce qu'
on dispose une zone plate isolante (18) entre les piles individuelles (17) plates et les zones électroniquement conductrices plates (19).
